# FASCICULE DE BREVET EUROPEEN

(11) **EP 4 264 062 B1**
(45) Date de publication et mention de la délivrance du brevet: **23.10.2024**
(21) Numéro de dépôt: 21830453.3
(22) Date de dépôt: 25.11.2021
(51) Int. Cl.: F16B 5/02, F16B 5/06, F16B 35/06

(54) **ASSEMBLAGE POUR UNE TURBOMACHINE**
TURBINENMOTORANORDNUNG
TURBINE ENGINE ASSEMBLY

(30) Priorité: 15.12.2020 FR 2013280
(43) Date de publication de la demande: 25.10.2023
(73) Titulaire: Safran Ceramics, 33185 Le Haillan (FR)
(72) Inventeur: BOUCHY, Gaël, 77550 Moissy-Cramayel (FR); REVEL, Thomas, 77550 Moissy-Cramayel (FR); AUPETIT, Christophe, Paul, 77550 Moissy-Cramayel (FR); TESSON, Thierry, Guy, Xavier, 77550 Moissy-Cramayel (FR)
(74) Mandataire: Ernest Gutmann - Yves Plasseraud S.A.S.
(86) Numéro de dépôt international: PCT/FR2021/052095
(87) Numéro de publication internationale: WO 2022/129722

(56) Documents cités:
- FR-A1- 3 038 942
- FR-A1- 3 044 701

## Description

### Domaine technique de l'invention

L'invention concerne un assemblage pour une turbomachine, telle par exemple qu'un turboréacteur ou un turbopropulseur d'avion.

### Etat de la technique antérieure

L'un des objectifs principaux dans la conception d'une turbomachine, en particulier dans le domaine aéronautique, est la réduction de masse. Une telle réduction de masse influe en particulier sur la consommation de carburant.

Dans un tel contexte, il est envisagé de remplacer de nombreuses pièces de la turbomachine traditionnellement réalisées en matériau métallique par des pièces en matériau composite à matrice céramique (C.M.C). Un tel matériau présente des propriétés mécaniques différentes, en particulier une faible résistance à l'arrachement, au matage ou en tenue sous une tête de vis ou une rondelle par exemple.

L'invention s'inscrit dans ce contexte et vise à permettre un assemblage boulonné de deux pièces, dont l'une des pièces au moins peut être réalisé en un matériau à matrice composite céramique, par exemple. Bien entendu, l'invention est également applicable à d'autres matériaux présentant certaines caractéristiques mécaniques dégradées par rapport aux matériaux métalliques traditionnellement utilisés.

Le document FR 3 038 942 A1 divulgue un assemblage par liaison mécanique comportant au moins une pièce en matériau composite.

### Présentation de l'invention

A cet effet, l'invention concerne un assemblage pour une turbomachine, ledit assemblage comportant au moins une première pièce et une seconde pièce, et au moins un boulon comportant une vis coopérant avec un écrou, ladite vis s'étendant au travers d'un orifice de la première pièce et d'un orifice de la seconde pièce, le boulon comportant en outre un organe d'appui comprenant une collerette annulaire montée entre la vis ou l'écrou, d'une part, et la première pièce, d'autre part, ladite collerette comportant une surface d'appui venant en appui, au moins partiellement, sur une surface d'appui complémentaire de la première pièce, caractérisé en ce que ladite surface d'appui de la collerette est tronconique et forme un angle avec la surface d'appui complémentaire de la première pièce de sorte que seule une zone périphérique externe de ladite surface d'appui de la collerette vienne au contact de la surface d'appui complémentaire de la première pièce, dans un état non serré du boulon, ladite collerette étant déformable de sorte que, lors du serrage dudit écrou sur la vis, une plus grande zone de la surface d'appui de la collerette vient en appui sur la surface d'appui complémentaire de la première pièce.

Une telle structure permet de répartir efficacement les contraintes mécaniques sur la collerette lors du serrage du boulon. En effet, lors d'un tel serrage, la déformation de la collerette permet d'uniformiser l'appui de ladite collerette sur la première pièce. Cette caractéristique permet également d'augmenter la surface d'appui de la collerette sur la première pièce.

La collerette peut être en appui sur la première pièce, soit directement, soit indirectement, par exemple par l'intermédiaire d'une rondelle.

Dans l'état non serré du boulon, l'angle entre la surface d'appui de la collerette par rapport à la surface d'appui complémentaire de la première pièce peut être compris entre 0,1 et 6°. Dans l'état serré du boulon, cet angle peut être nul de sorte que toute la surface d'appui de la collerette est en appui sur la surface d'appui complémentaire de la première pièce. L'épaisseur de la collerette dans sa zone périphérique externe peut être inférieure à l'épaisseur de la collerette dans sa zone périphérique interne.

L'épaisseur est la dimension de la collerette suivant l'axe de la collerette.

L'épaisseur de la collerette dans la zone périphérie interne peut être compris entre 1 et 5 fois l'épaisseur de la collerette dans la zone périphérique externe.

Une telle variation d'épaisseur permet de mieux répartir les contraintes mécaniques.

La première pièce peut être réalisée en matériau céramique à matrice composite.

La seconde pièce peut être réalisée dans un matériau métallique, par exemple en superalliage à base nickel, par exemple en Inco625, Inco718, ou Waspaloy.

L'assemblage peut comporter une entretoise montée entre la seconde pièce et une partie du boulon, ladite entretoise étant réalisée dans un matériau présentant un coefficient de dilatation plus important que celui de la vis.

Une telle caractéristique permet maintenir le serrage des deux pièces ensemble malgré d'éventuels effets de dilatation différentiels.

La vis est par exemple réalisée en un matériau de type Inconel 718 ou Waspaloy, Inconel et Waspaloy étant des marques. L'entretoise est par exemple réalisée en un matériau de type A286.

La surface de l'extrémité de l'entretoise en appui sur la seconde pièce peut être comprise entre 0,1 et 3 fois la surface de la collerette.

L'extrémité de l'entretoise en appui sur la seconde pièce peut être logée, au moins en partie, dans un lamage de la seconde pièce.

L'écrou peut être formé par l'extrémité correspondante de l'entretoise.

L'assemblage peut comporter une douille, ladite douille comprenant une partie cylindrique entourant la vis et logée au moins en partie dans les orifices des première et seconde pièces, ladite collerette étant formée par la douille et s'étendant depuis une extrémité de la partie cylindrique.

Dans ce cas, la douille peut être maintenue par une tête de la vis. Ladite tête de la vis peut être tronconique et venir en appui sur un chanfrein interne de la douille.

La partie cylindrique de la douille peut être logée, au moins en partie, dans un évidement de l'entretoise.

La collerette peut être formée à une extrémité de la vis.

L'entretoise peut comporter une extrémité en appui sur la seconde pièce et une extrémité en appui sur l'écrou ou sur une partie de la vis.

L'appui de l'entretoise sur la seconde pièce peut être un appui direct ou indirect, par exemple par l'intermédiaire d'une rondelle.

La collerette peut être logée, au moins en partie, dans un lamage de la première pièce.

L'entretoise peut être centrée sur une partie de la vis ou sur la partie cylindrique de la douille. L'invention concerne également une turbomachine, caractérisée en ce qu'elle comporte un assemblage du type précité.

La turbomachine peut être un turboréacteur ou un turbopropulseur d'aéronef.

L'invention concerne également un aéronef, par exemple un avion, comportant une turbomachine du type précité.

### Brève description des figures

[Fig. 1] est une vue en coupe d'un assemblage selon une forme de réalisation de l'invention,
[Fig. 2] est une vue de détail de la figure 1,
[Fig. 3] est une vue en perspective de l'assemblage de la figure 1,
[Fig. 4] est une vue en perspective de l'assemblage de la figure 1, dans laquelle les première et seconde pièces ont été retirées,
[Fig. 5] est une vue en coupe d'un assemblage selon une autre forme de réalisation de l'invention,
[Fig. 6] est une vue de détail de la figure 5,
[Fig. 7] est une vue en perspective de l'assemblage de la figure 5,
[Fig. 8] est une vue en perspective de l'assemblage de la figure 5, dans laquelle les première et seconde pièces ont été retirées.

### Description détaillée de l'invention

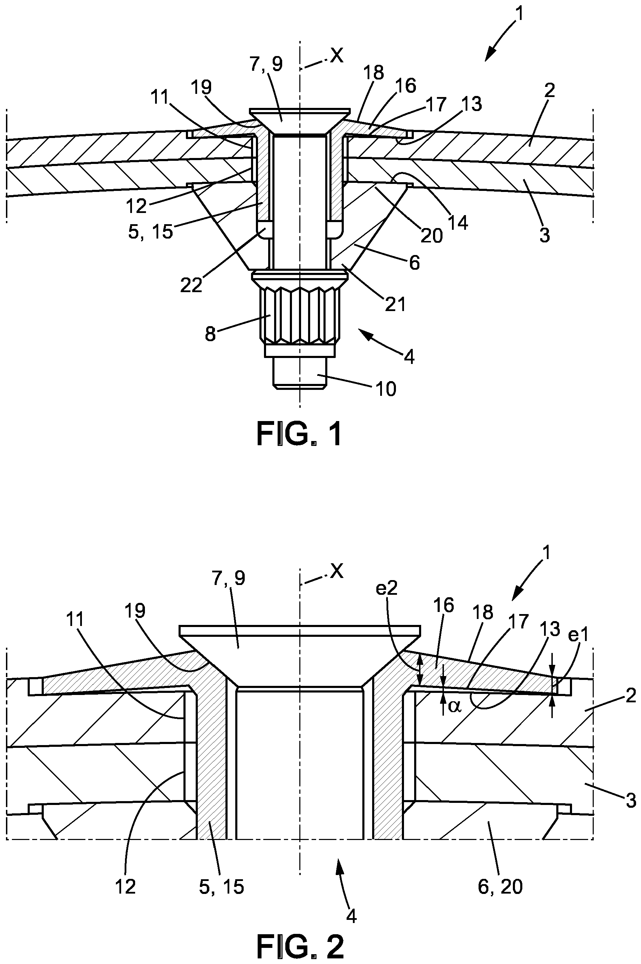

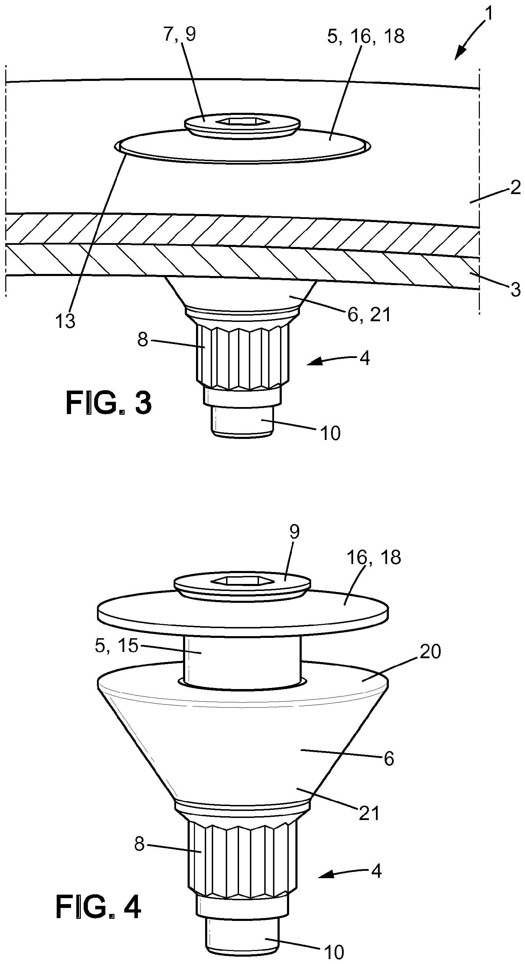

Les figures 1 à 4 illustrent un assemblage 1 pour une turbomachine d'aéronef selon une première forme de réalisation de l'invention. L'assemblage 1 comporte une première pièce 2 réalisée en matériau composite à matrice céramique, une seconde pièce métallique 3, un boulon 4, une douille 5 et une entretoise 6.

Les pièces 2, 3 assemblées sont formées par des parois coaxiales cylindriques ou en portion de cylindre. Le boulon 4 comporte une vis 7 et un écrou 8. La vis 7 comporte une première extrémité comportant une tête conique 9 et une seconde extrémité filetée 10 sur laquelle est vissé l'écrou 8. La vis 7 traverse des orifices 11, 12 de la première pièce 2 et de la seconde pièce 3. Un lamage 13 est formé autour de l'orifice 11 de la première pièce 2. Un lamage 14 est également formé autour de l'orifice 12 de la seconde pièce 3.

La douille 5 comporte une partie cylindrique 15 entourant la vis 7 et engagée dans les orifices 11, 12. Une extrémité de la partie cylindrique 15 est prolongée par une collerette annulaire 16 de forme générale tronconique.

En particulier, la collerette 16 comporte une surface d'appui tronconique 17 tournée en regard d'une surface d'appui complémentaire 13 de la première pièce 2. Ladite surface d'appui complémentaire est formée par la surface de fond du lamage 13 de la première pièce 2, la collerette 16 étant logée en partie dans ledit lamage 13.

La surface d'appui 17 de la collerette 16 forme un angle α (Figure 2) avec la surface d'appui complémentaire 13 de la première pièce 2 de sorte que seule une zone périphérique externe de ladite surface d'appui de la collerette 16 vienne au contact de la surface d'appui complémentaire 13 de la première pièce 2, dans un état non serré du boulon 4. La collerette 16 est par ailleurs déformable de sorte que, lors du serrage dudit écrou 8 sur la vis 7, une plus grande zone de la surface d'appui 17 de la collerette 16 vient en appui sur la surface d'appui complémentaire 13 de la première pièce 2.

La collerette 16 peut être en appui sur la première pièce 2, soit directement, soit indirectement, par exemple par l'intermédiaire d'une rondelle.

Dans l'état non serré du boulon 4, l'angle α entre la surface d'appui 17 de la collerette 16 par rapport à la surface d'appui complémentaire 13 de la première pièce 2 est compris entre 0,1 et 6°.

Dans l'état serré du boulon 4, cet angle α peut être nul de sorte que toute la surface d'appui 17 de la collerette 16 est en appui sur la surface d'appui complémentaire 13 de la première pièce 2.

L'épaisseur e1 de la collerette 16 dans sa zone périphérique externe est inférieure à l'épaisseur e2 de la collerette 16 dans sa zone périphérique interne. L'épaisseur est la dimension de la collerette 16 suivant l'axe X de la collerette 16, qui est confondu avec l'axe de la vis 7, de l'écrou 8, de la douille 5 et de l'entretoise 6. L'épaisseur e2 de la collerette 16 dans la zone périphérie interne peut être compris entre 1 et 5 fois l'épaisseur e1 de la collerette 16 dans la zone périphérique externe.

La variation d'épaisseur est une variation continue. En particulier, la surface 18 de la collerette 16 opposée à la surface d'appui 17 est une surface tronconique.

La tête 9 de la vis 7 vient en appui sur un chanfrein interne 19 de la douille 5.

L'entretoise 6 est annulaire et comporte une première extrémité 20 en appui sur la surface de fond du lamage 14 de la seconde pièce 3 et une seconde extrémité 21 en appui sur l'écrou 8. L'entretoise 6 présente une forme tronconique évasée en direction de la première extrémité 20. Le diamètre externe et le diamètre interne de la première extrémité 20 correspondent globalement aux diamètres externe et interne de la collerette 16.

L'entretoise 6 présente un évidement interne 22 servant à loger partiellement la partie cylindrique 15 de la douille 5. Ladite partie cylindrique 15 est par ailleurs centrée dans ledit évidement interne 22. L'entretoise 6 est réalisée dans un matériau présentant un coefficient de dilatation plus important que celui de la vis 7, de manière à maintenir le serrage des deux pièces 2, 3 ensemble malgré d'éventuels effets de dilatation différentiels.

La vis 7 est par exemple réalisée en un matériau de type Inconel 718 ou Waspaloy, Inconel et Waspaloy étant des marques. L'entretoise 6 est par exemple réalisée en un matériau de type A286.

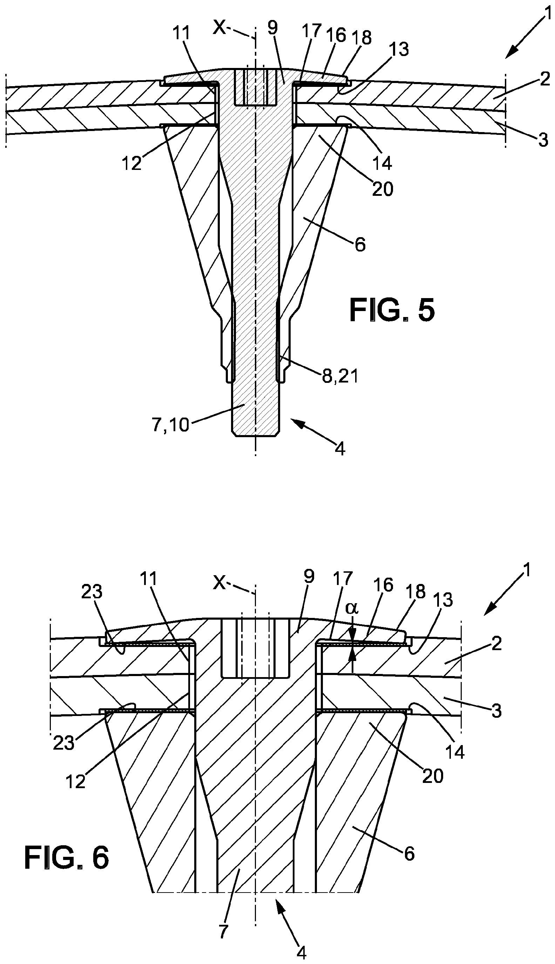

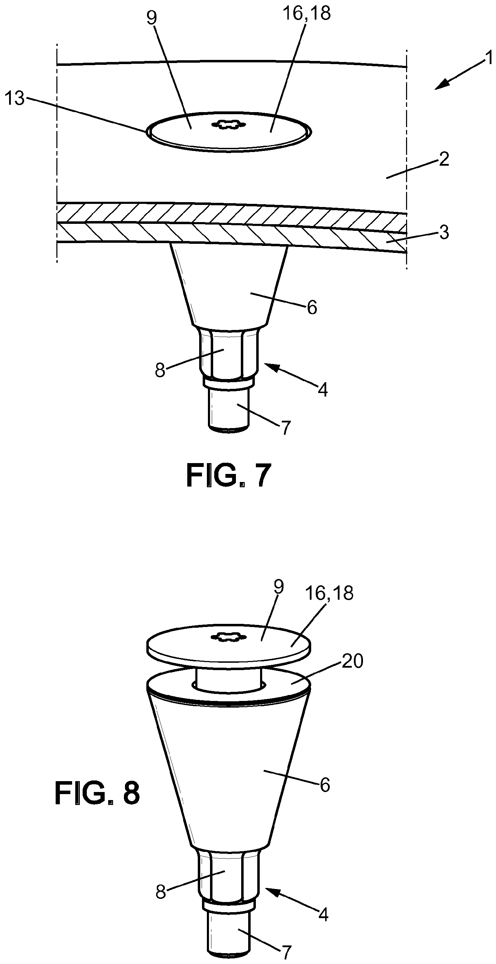

Les figures 5 à 8 illustrent un assemblage selon une autre forme de réalisation de l'invention, qui diffère de la forme de réalisation illustrée aux figures 1 à 4 en ce que l'assemblage est dépourvu de douille 5, la collerette 16 étant formée par la tête 9 de la vis 7. La vis 7 est centrée dans l'entretoise 6, au niveau de l'extrémité 20 de ladite entretoise 6. Dans cette forme de réalisation également, des rondelles 23 peuvent être montées entre la collerette 16 et la première pièce 2, d'une part, et entre l'entretoise 6 et la seconde pièce 3, d'autre part.

Par ailleurs, l'assemblage 1 est dépourvu d'écrou 8 distinct, l'écrou 8 étant ici formée par l'extrémité correspondante 21 de l'entretoise 6.

## Revendications

1. Assemblage (1) pour une turbomachine, ledit assemblage (1) comportant au moins une première pièce (2) et une seconde pièce (3), et au moins un boulon (4) comportant une vis (7) coopérant avec un écrou (8), ladite vis (7) s'étendant au travers d'un orifice (11) de la première pièce (2) et d'un orifice (12) de la seconde pièce (3), le boulon (4) comportant en outre un organe d'appui comprenant une collerette (16) annulaire montée entre la vis (7) ou l'écrou (8), d'une part, et la première pièce (2), d'autre part, ladite collerette (16) comportant une surface d'appui (17) venant en appui, au moins partiellement, sur une surface d'appui complémentaire (13) de la première pièce (2), ladite surface d'appui (17) de la collerette (16) étant tronconique, **caractérisé en ce que** ladite surface d'appui (17) de la collerette (16) forme un angle (α) avec la surface d'appui complémentaire (13) de la première pièce (2) de sorte que seule une zone périphérique externe de ladite surface d'appui (17) de la collerette (16) vienne au contact de la surface d'appui complémentaire (13) de la première pièce (2), dans un état non serré du boulon (4), ladite collerette (16) étant déformable de sorte que, lors du serrage dudit écrou (8) sur la vis (7), une plus grande zone de la surface d'appui (17) de la collerette (16) vient en appui sur la surface d'appui complémentaire (13) de la première pièce (2).

2. Assemblage (1) selon la revendication 1, **caractérisé en ce que**, dans l'état non serré du boulon (4), l'angle (α) entre la surface d'appui (17) de la collerette (16) par rapport à la surface d'appui complémentaire (13) de la première pièce (2) est compris entre 0,1 et 6°.

3. Assemblage (1) selon la revendication 1 ou 2, **caractérisé en ce que** l'épaisseur (e1) de la collerette (16) dans sa zone périphérique externe est inférieure à l'épaisseur (e2) de la collerette (16) dans sa zone périphérique interne.

4. Assemblage (1) selon l'une des revendications 1 à 3, **caractérisé en ce que** la première pièce (2) est réalisée en matériau céramique à matrice composite.

5. Assemblage (1) selon l'une des revendications 1 à 4, **caractérisé en ce qu'**il comporte une entretoise (6) montée entre la seconde pièce (3) et une partie du boulon (4), ladite entretoise (6) étant réalisée dans un matériau présentant un coefficient de dilatation plus important que celui de la vis (7).

6. Assemblage (1) selon l'une des revendications 1 à 5, **caractérisé en ce qu'**il comporte une douille (5), ladite douille (5) comprenant une partie cylindrique (15) entourant la vis (7) et logée au moins en partie dans les orifices (11, 12) des première et seconde pièces (3), ladite collerette (16) étant formée par la douille (5) et s'étendant depuis une extrémité de la partie cylindrique (15).

7. Assemblage (1) selon l'une des revendications 1 à 5, **caractérisé en ce que** la collerette (16) est formée à une extrémité de la vis (7).

8. Assemblage (1) selon la revendication 5, **caractérisé en ce que** l'entretoise (6) comporte une extrémité (20) en appui sur la seconde pièce (3) et une extrémité (21) en appui sur l'écrou (8) ou sur une partie de la vis (7).

9. Assemblage (1) selon l'une des revendications 1 à 8, **caractérisé en ce que** la collerette (16) est logée, au moins en partie, dans un lamage (13) de la première pièce (2).

10. Turbomachine, **caractérisée en ce qu'**elle comporte un assemblage (1) selon l'une des revendications 1 à 9.

## Patentansprüche

1. Anordnung (1) für eine Turbomaschine bzw. ein Turbotriebwerk, wobei die Anordnung (1) zumindest ein erstes Teil (2) und ein zweites Teil (3) sowie zumindest einen Bolzen (4) mit einer Schraube (7) umfasst, die mit einer Mutter (8) zusammenwirkt, wobei sich die Schraube (7) durch eine Öffnung (11) des ersten Teils (2) und eine Öffnung (12) des zweiten Teils (3) erstreckt, wobei der Bolzen (4) ferner ein Auflageglied mit einem ringförmigen Kragen (16) aufweist, der zwischen der Schraube (7) oder der Mutter (8) einerseits und dem ersten Teil (2) andererseits gelagert ist, wobei der Kragen (16) eine Auflagefläche (17) aufweist, die zumindest teilweise an einer komplementären Auflagefläche (13) des ersten Teils (2) zur Anlage kommt, wobei die Auflagefläche (17) des Kragens (16) kegelstumpfförmig ausgebildet ist,
**dadurch gekennzeichnet, dass** die Auflagefläche (17) des Kragens (16) einen Winkel (α) mit der komplementären Auflagefläche (13) des ersten Teils (2) bildet, so dass in einem nicht angezogenen Zustand des Bolzens (4) nur ein äußerer Umfangsbereich der Auflagefläche (17) des Kragens (16) mit der komplementären Auflagefläche (13) des ersten Teils (2) in Kontakt kommt, wobei der Kragen (16) verformbar ist, so dass beim Anziehen der Mutter (8) an der Schraube (7) ein größerer Bereich der Auflagefläche (17) des Kragens (16) an der komplementären Auflagefläche (13) des ersten Teils (2) zur Anlage kommt.

2. Anordnung (1) nach Anspruch 1,
**dadurch gekennzeichnet, dass** im nicht angezogenen Zustand des Bolzens (4) der Winkel (α) zwischen der Auflagefläche (17) des Kragens (16) und der komplementären Auflagefläche (13) des ersten Teils (2) zwischen 0,1 und 6° beträgt.

3. Anordnung (1) nach Anspruch 1 oder 2,
**dadurch gekennzeichnet, dass** die Dicke (e1) des Kragens (16) in seinem äußeren Umfangsbereich kleiner ist als die Dicke (e2) des Kragens (16) in seinem inneren Umfangsbereich.

4. Anordnung (1) nach einem der Ansprüche 1 bis 3,
**dadurch gekennzeichnet, dass** das erste Teil (2) aus einem Keramikmaterial mit Verbundmatrix hergestellt ist.

5. Anordnung (1) nach einem der Ansprüche 1 bis 4,
**dadurch gekennzeichnet, dass** sie eine Strebe (6) umfasst, die zwischen dem zweiten Teil (3) und einem Abschnitt des Bolzens (4) angebracht ist, wobei die Strebe (6) aus einem Material mit einem größeren Ausdehnungskoeffizienten als der der Schraube (7) hergestellt ist.

6. Anordnung (1) nach einem der Ansprüche 1 bis 5,
**dadurch gekennzeichnet, dass** sie eine Hülse (5) umfasst, wobei die Hülse (5) einen zylindrischen Abschnitt (15) umfasst, der die Schraube (7) umgibt und zumindest teilweise in den Öffnungen (11, 12) des ersten und zweiten Teils (3) aufgenommen ist, wobei der Kragen (16) aus der Hülse (5) gebildet ist und sich von einem Ende des zylindrischen Abschnitts (15) aus erstreckt.

7. Anordnung (1) nach einem der Ansprüche 1 bis 5,
**dadurch gekennzeichnet, dass** der Kragen (16) an einem Ende der Schraube (7) ausgebildet ist.

8. Anordnung (1) nach Anspruch 5,
**dadurch gekennzeichnet, dass** die Strebe (6) ein an dem zweiten Teil (3) anliegendes Ende (20) und ein an der Mutter (8) oder an einem Abschnitt der Schraube (7) anliegendes Ende (21) aufweist.

9. Anordnung (1) nach einem der Ansprüche 1 bis 8,
**dadurch gekennzeichnet, dass** der Kragen (16) zumindest teilweise in einer Senkung (13) des ersten Teils (2) aufgenommen ist.

10. Turbomaschine bzw. Turbotriebwerk,
**dadurch gekennzeichnet, dass** sie bzw. es eine Anordnung (1) nach einem der Ansprüche 1 bis 9 aufweist.

## Claims

1. Assembly (1) for a turbine engine, said assembly (1) comprising at least a first part (2) and a second part (3), and at least one bolt (4) which comprises a screw (7) cooperating with a nut (8), said screw (7) extending throughout an orifice (11) of the first part (2) and an orifice (12) of the second part (3), the bolt (4) further including a bearing member comprising an annular flange (16) mounted between the screw (7) or the nut (8), on the one hand, and the first part (2), on the other hand, said annular flange (16) comprising a bearing surface (17) bearing, at least partially, on a complementary bearing surface (13) of the first part (2), said bearing surface (17) of the annular flange (16) being frustoconical, **characterized in that** said bearing surface (17) of the annular flange (16) forms an angle (α) with the complementary bearing surface (13) of the first part (2) so that only an outer peripheral area of said bearing surface (17) of the annular flange (16) comes into contact with the complementary bearing surface (13) of the first part (2), in an untightened state of the bolt (4), said annular flange (16) being deformable so that, when tightening said nut (8) on the screw (7), a larger area of the bearing surface (17) of the annular flange (16) bears on the complementary bearing surface (13) of the first part (2).

2. Assembly (1) according to claim 1, **characterized in that**, in the untightened state of the bolt (4), the angle (α) between the bearing surface (17) of the annular flange (16) with respect to the complementary bearing surface (13) of the first part (2) is comprised between 0,1 and 6°.

3. Assembly (1) according to claim 1 or 2, **characterized in that** the thickness (e1) of the annular flange (16) in its outer peripheral area is smaller than the thickness (e2) of the annular flange (16) in its inner peripheral area.

4. Assembly (1) according to one of claims 1 to 3, **characterized in that** the first part (2) is made of a composite matrix ceramic material.

5. Assembly (1) according to one of claims 1 to 4, **characterized in that** it includes a spacer (6) mounted between the second part (3) and portion of the bolt (4), said spacer (6) being made of a material having a higher coefficient of expansion than that of the screw (7).

6. Assembly (1) according to one of claims 1 to 5, **characterized in that** it includes a bushing (5), said bushing (5) comprising a cylindrical portion (15) surrounding the screw (7) and accommodated at least partially in the orifices (11, 12) of the first and second parts (3), said annular flange (16) being formed by the bushing (5) and extending from one end of the cylindrical portion (15).

7. Assembly (1) according to one of claims 1 to 5, **characterized in that** the annular flange (16) is formed at one end of the screw (7).

8. Assembly (1) according to claim 5, **characterized in that** the spacer (6) includes one end (20) bearing on the second part (3) and one end (21) bearing on the nut (8) or on a portion of the screw (7).

9. Assembly (1) according to one of claims 1 to 8, **characterized in that** the annular flange (16) is accommodated, at least partially, in a counterbore (13) of the first part (2).

10. Turbine engine, **characterized in that** it includes an assembly (1) according to one of claims 1 to 9.
